# EUROPÄISCHE PATENTSCHRIFT

(11) **EP 4 125 530 B1**
(45) Veröffentlichungstag und Bekanntmachung des Hinweises auf die Patenterteilung: **09.09.2026**
(21) Anmeldenummer: 21712107.8
(22) Anmeldetag: 11.03.2021
(51) Int. Cl.: A47L 15/42, D06F 39/12

(54) **ISOLATIONSVORRICHTUNG, HAUSHALTSGERÄT UND VERFAHREN**
INSULATION DEVICE, DOMESTIC APPLIANCE, AND METHOD
DISPOSITIF D'ISOLATION, APPAREIL MÉNAGER ET PROCÉDÉ

(30) Priorität: 30.03.2020 DE 102020204084
(43) Veröffentlichungstag der Anmeldung: 08.02.2023
(73) Patentinhaber: BSH Hausgeräte GmbH, 81739 München (DE)
(72) Erfinder: SING, Alexander, 89426 Wittislingen (DE); BISGIN, Sami, 89407 Dillingen (DE); FICKLER, Michael, 86152 Augsburg (DE); HESSEL, Maximilian, 89231 Neu-Ulm (DE)
(86) Internationale Anmeldenummer: PCT/EP2021/056172
(87) Internationale Veröffentlichungsnummer: WO 2021/197793

(56) Entgegenhaltungen:
- EP-A1- 3 274 388
- DE-A1- 10 118 632
- US-A- 6 165 300
- US-A1- 2011 168 217

## Beschreibung

Die vorliegende Erfindung betrifft eine Isolationsvorrichtung für einen Aufnahmebereich eines Haushaltsgeräts, insbesondere eines wasserführenden Haushaltsgeräts, ein Haushaltsgerät, insbesondere ein wasserführendes Haushaltsgerät, mit einer derartigen Isolationsvorrichtung und ein Verfahren zum Herstellen einer derartigen Isolationsvorrichtung.

Im Betrieb einer Haushaltsgeschirrspülmaschine gibt es eine Vielzahl an Schallquellen, welche zu einer Schallemission führen können. Dieser Schall gelangt bis zu dem Ohr eines Benutzers und kann von diesem negativ wahrgenommen werden. Eine Möglichkeit zur Schallreduktion besteht darin, die Schallemission an der Schallquelle zu reduzieren und somit den an dem Ohr des Benutzers eintreffenden Schalldruck zu reduzieren. Dies ist jedoch vor allem bei Schallereignissen, welche auf stochastischen Ereignissen beruhen oder die von dem Benutzer beeinflusst werden können, nicht immer zufriedenstellend möglich. Dies kann beispielsweise bei einem Sprühstrahl in dem Inneren eines Spülbehälters der Haushaltsgeschirrspülmaschine der Fall sein. Eine Ablenkung des Sprühstrahls wird stark durch die unterschiedliche Einordnung von Spülgut in den Spülbehälter beeinflusst. Es lässt sich daher nicht verhindern, dass der Sprühstrahl direkt auf den Spülbehälter trifft. Es ist auch nicht festzulegen, an welcher Stelle und in welchem Winkel der Sprühstrahl auf den Spülbehälter auftrifft.

Bei einem Entwurf der akustischen Dämmung muss daher damit gerechnet werden, dass es an jeder Stelle des Spülbehälters zu einer Anregung von Körperschall kommen kann. Bei besonders leisen Haushaltsgeschirrspülmaschinen muss daher, soweit technisch und konstruktiv möglich, jede Stelle des Spülbehälters mit einem akustisch wirksamen Material belegt werden, um dieser nicht zu verhindernden Anregung wirksam entgegenzutreten. Diese direkt auf den Spülbehälter aufgebrachten Materialien dienen hauptsächlich dazu, den in dem Metall des Spülbehälters angeregten Körperschall beziehungsweise dessen Strukturschwingungen zu dämpfen. Das heißt, durch diese akustisch wirksamen Materialien wird die Schwingungsamplitude der Oberfläche, welche durch die Anregung in dem Inneren des Spülbehälters entsteht, reduziert. Die Energie des Körperschalls wird dabei in dem akustisch wirksamen Material in Wärme umgewandelt.

Der Anmelderin ist betriebsinterner Stand der Technik bekannt, bei dem Bitumenmatten mit einer Schmelzkleberbeschichtung unter Temperatureinwirkung direkt auf den Spülbehälter aufgeschmolzen werden. Diese Bitumenmatten gehen dadurch eine dauerhafte Verbindung mit dem Blech des Spülbehälters ein. Eine weitere Möglichkeit ist der Einsatz von Polyurethanen. Derartige Polyurethane können direkt an dem Spülbehälter angebracht werden, um den Körperschall und die Strukturschwingungen zu dämpfen.

Ferner ist der Anmelderin betriebsinterner Stand der Technik bekannt, bei dem Dämmbauteile vor dem Aushärten und/oder Vernetzen als Flüssigkeit direkt in ein Hohlbauteil eingespritzt werden. In dem begrenzten Volumen des Hohlbauteils reagiert die Flüssigkeit unter Bildung des Dämmbauteils aus. Dabei müssen die das Dämmbauteil umgebenden Bauteilschichten schon vor dem Einspritzen der das Dämmbauteil bildenden Flüssigkeit gefügt sein. Dies wird vor allem bei Kühlgeräten zu thermischen Isolation eines Innenraums des Kühlgeräts zur Umgebung hin umgesetzt. Dabei dient das Dämmbauteil auch zur Stabilisierung des Kühlgeräts. Dazu wird als Dämmbauteil im Wesentlichen geschlossenzelliger Hartschaum eingesetzt. Dieser bietet durch seine Struktur eine hohe Steifigkeit. Alternativ können Dämmbauteile separat gefertigt und über Auflegen, Klemmen, Kleben an einem Haushaltsgerät montiert werden. Dazu müssen diese in einem formgebenden Werkzeug hergestellt und anschließend an dem Haushaltsgerät angebracht werden.

Die Druckschrift EP 3 092 935 A1 offenbart eine Anordnung zur akustischen und thermischen Isolation eines Aufnahmebereichs eines wasserführenden Haushaltsgeräts. Die Anordnung umfasst ein erstes Isolationselement, welches dazu eingerichtet ist, einen Aufnahmebereich thermisch zu isolieren, und ein zweites Isolationselement, welches dazu eingerichtet ist, den Aufnahmebereich akustisch zu isolieren, wobei das erste Isolationselement zwischen dem Aufnahmebereich und dem zweiten Isolationselement angeordnet ist. Dabei ist das erste Isolationselement direkt an den Aufnahmebereich angeschäumt.

Die Druckschrift DE 101 18 632 A1 offenbart einen geräusch- und wärmeisolierten Spülbehälter für eine Geschirrspülmaschine mit einer den Spülbehälter verschließenden Gerätetür, wobei die Isolierung ein- oder mehrschichtig auf die Behälteraußenseiten haftend aufgebracht ist und wobei die Außenseiten von dem Spülbehälter und gegebenenfalls der Gerätetür mit einer nichtschäumenden Isoliermasse auf Polyurethanbasis belegt sind. Auf die nichtschäumende Isoliermasse kann eine Isolierschicht aus einem schäumenden PU-Werkstoff aufgebracht sein. Weiterhin kann der den Spülbehälter sowie die Gerätetür umfassende Behälter aus Edelstahl bestehen und das Isoliermaterial kann in flüssiger Form manuell oder verfahrensgesteuert auf die Behälteraußenseiten aufgespritzt, gesprüht, gestrichen oder aufgegossen werden.

Die Druckschrift US 6,165,300 A offenbart ein Verfahren zur Herstellung von wenigstens zweischichtigen Verbundkörpern mit einem ganz oder überwiegend aus einem Polymer bestehenden Trägermaterial und einer mit dieser fest verbundenen porösen Schicht aus einem mit Hilfe eines Treibmittels aufgeschäumten Polymer. Für das Trägermaterial wird ein mikrowellendurchlässiges Polymer und für die poröse Schicht ein Polymer mit mikrowellenabsorbierenden Eigenschaften verwendet. Das mit dem Treibmittel versetzte Polymer wird mit Mikrowellen-Energie bis auf die Zersetzungstemperatur des Treibmittels erwärmt und der entstehende Polymerschaum wird zugleich oder anschließend mittels Mikrowellen-Energie soweit erhitzt, dass das Trägermaterial an seiner Grenzschicht zu dem aufgeschäumten Polymer allein durch Wärmeleitung aus diesem soweit anschmilzt, dass nach dem Abkühlen ein fester Verbund von Trägermaterial und geschäumtem Polymer erhalten wird. Die Druckschrift US2011/168217 offenbart einen geräusch- und wärmeisolierten Spülbehälter für eine Geschirrspülmaschine mit einer Isolationsvorrichtung aus einem viskoelastischen Polyurethanschaum.

Vor diesem Hintergrund besteht eine Aufgabe der vorliegenden Erfindung darin, eine verbesserte Isolationsvorrichtung für ein Haushaltsgerät zur Verfügung zu stellen. Demgemäß wird eine Isolationsvorrichtung für einen Aufnahmebereich eines Haushaltsgeräts, insbesondere eines wasserführenden Haushaltsgeräts, mit einem Isolationselement zum akustischen Isolieren des Aufnahmebereichs des Haushaltsgeräts, insbesondere des wasserführenden Haushaltsgeräts, vorgeschlagen. Die Isolationsvorrichtung umfasst ein aus einem viskoelastischen Polyurethanschaum gefertigtes Isolationselement zum akustischen Isolieren des Aufnahmebereichs und ein das Isolationselement versteifendes und fest mit dem Isolationselement verbundenes Versteifungselement.

Dadurch, dass die Isolationsvorrichtung das Versteifungselement aufweist, ist die Isolationsvorrichtung zur Montage an dem Aufnahmebereich leichter handhabbar. Ferner deckt das Versteifungselement eine klebrige Oberfläche des viskoelastischen Polyurethanschaums ab, so dass ein Benutzer nicht in Kontakt mit diesem kommen kann.

Der Aufnahmebereich kann insbesondere ein Spülbehälter einer Haushaltsgeschirrspülmaschine sein. Das heißt, das Haushaltsgerät ist bevorzugt eine Haushaltsgeschirrspülmaschine.

Unter "Viskoelastizität" ist vorliegend ein teilweise elastisches, teilweise viskoses Materialverhalten zu verstehen. Viskoelastische Materialien vereinigen also Merkmale von Festkörpern und Flüssigkeiten in sich. Die Isolationsvorrichtung ist bevorzugt geeignet, den Aufnahmebereich akustisch und/oder thermisch zu isolieren beziehungsweise zu dämmen. Daher kann die Isolationsvorrichtung auch als Dämmvorrichtung, insbesondere als akustisch und/oder thermische Dämmvorrichtung, bezeichnet werden.

Der viskoelastische Polyurethanschaum umfasst insbesondere ein Matrixmaterial, nämlich ein Polyurethan, welches mit einer Vielzahl an Zellen oder Poren durchsetzt ist, um so den viskoelastischen Polyurethanschaum zu bilden. Die Poren können gasgefüllt, insbesondere luftgefüllt, sein. Der viskoelastische Polyurethanschaum kann offenporig oder geschlossenporig sein. "Offenporig" bedeutet vorliegend, dass die Poren untereinander in Verbindung sind. Das heißt, der viskoelastische Polyurethanschaum kann schwammartig sein. "Geschlossenporig" bedeutet vorliegend, dass die Poren nicht untereinander in Verbindung sind. Der viskoelastische Polyurethanschaum kann durch das Vermischen von Polyurethanrohkomponenten, nämlich einem Isocyanat und einem Polyol, gegebenenfalls unter Zugabe eines Treibmittels, hergestellt werden.

Gemäß einer Ausführungsform weist der viskoelastische Polyurethanschaum bei 40 °C und bei einer Frequenz von 100 bis 800 Hz einen Verlustfaktor von größer als 0,2, bevorzugt von größer als 0,35, weiter bevorzugt von größer als 0,5, auf.

Unter dem "Verlustfaktor" ist vorliegend bei physikalischen Schwingungen unterschiedlicher Natur das Verhältnis des verlustbehafteten Imaginärteils zu dem verlustfreien Realteil einer komplexen Größe zu verstehen. Je höher der Verlustfaktor ist, desto größer ist das akustische Isolationsvermögen der Isolationsvorrichtung. Insbesondere ist das Isolationselement geeignet, Körperschall in Wärme umzuwandeln.

Gemäß einer weiteren Ausführungsform weist der viskoelastische Polyurethanschaum eine Wärmeleitfähigkeit zwischen 20 und 80 mW/(m*K), bevorzugt zwischen 40 und 60 mW/(m*K), weiter bevorzugt zwischen 50 und 60 mW/(m*K), auf.

Das heißt, die Isolationsvorrichtung weist, wie zuvor erwähnt, auch thermische Isolationseigenschaften oder thermische Dämmeigenschaften auf. Die Wärmeleitfähigkeit des viskoelastischen Polyurethanschaums wird geringer, je mehr Poren dieser aufweist oder je geringer der Anteil des Matrixmaterials an dem viskoelastischen Polyurethanschaum ist.

Gemäß einer weiteren Ausführungsform weist der viskoelastische Polyurethanschaum eine Dichte von weniger als 300 kg/m³, bevorzugt von weniger als 250 kg/m³, weiter bevorzugt von weniger als 200 kg/m³, auf.

Je höher der Anteil an Poren beziehungsweise je niedriger der Anteil des Matrixmaterials an dem viskoelastischen Polyurethanschaum ist, desto geringer ist dessen Dichte. Aufgrund des mit dem Isolationselement verbundenen Versteifungselements ist ein Handling der Isolationsvorrichtung auch dann noch möglich, wenn das Isolationselement eine sehr geringe Dichte aufweist und keine Biegesteifigkeit zeigt.

Gemäß einer weiteren Ausführungsform ist eine Dicke des Isolationselements größer als 2 mm, bevorzugt größer als 10 mm, weiter bevorzugt größer als 15 mm.

Das Isolationselement kann auch eine Dicke von beispielsweise 20 bis 50 mm oder mehr aufweisen.

Gemäß einer weiteren Ausführungsform ist eine Dicke des Versteifungselements kleiner als 10 mm, bevorzugt kleiner als 5 mm, weiter bevorzugt kleiner als 1 mm.

Vorzugsweise ist die Dicke des Versteifungselements ein Vielfaches kleiner als die Dicke des Isolationselements. Für den Fall, dass das Versteifungselement eine Dicke von weniger als 1 mm aufweist, ist dieses bevorzugt aus einem sehr steifen Material, wie beispielsweise einem Metallblech, gefertigt.

Gemäß einer weiteren Ausführungsform ist das Versteifungselement Teil des Aufnahmebereichs, aus Bitumen gefertigt, aus Blech gefertigt, aus Papier gefertigt, aus Pappe gefertigt, aus Aluminiumpappe gefertigt, aus Kunststoff, insbesondere aus einer Kunststofffolie, gefertigt oder aus Holz gefertigt.

Es kann eine beliebige Kombination der zuvor genannten Materialien verwendet werden. Für den Fall, dass das Versteifungselement Teil des Aufnahmebereichs ist, kann das Versteifungselement beispielsweise eine Tür, insbesondere eine Innentür, des Aufnahmebereichs sein. Ferner kann das Versteifungselement beispielsweise auch eine Decke, eine Seitenwand oder eine Rückwand des Aufnahmebereichs sein.

Gemäß einer weiteren Ausführungsform sind in dem viskoelastischen Polyurethanschaum Partikel eingebettet.

Die Partikel weisen vorzugsweise eine größere Dichte auf als der viskoelastische Polyurethanschaum oder als das Matrixmaterial. Die Partikel bilden so Massepunkte in dem viskoelastischen Polyurethanschaum, wodurch der Verlustfaktor variiert, insbesondere erhöht, werden kann. Die Partikel können beispielsweise Metallpartikel, Steinpartikel oder Graphitpartikel, insbesondere Blähgraphitpartikel, sein. Im letzten Fall weisen die Partikel dann auch intumeszente Eigenschaften auf. Die Partikel können jedoch auch Kunststoffpartikel sein. In diesem Fall weisen die Partikel jedoch eine größere Dichte als das Matrixmaterial oder als der viskoelastische Polyurethanschaum auf.

Gemäß einer weiteren Ausführungsform ist der viskoelastische Polyurethanschaum direkt an das Versteifungselement angeschäumt.

Hierzu kann das Versteifungselement beispielsweise in eine Form eingelegt werden. Auf das Versteifungselement wird ein Gemisch der zuvor genannten Polyurethankomponenten aufgebracht. Der sich durch eine chemische Reaktion der Rohkomponenten bildende viskoelastische Polyurethanschaum verbindet sich dann direkt mit dem Versteifungselement. Das Versteifungselement kann hierzu beispielsweise aufgeraut sein. Ferner können dem Gemisch auch chemische Zusätze zugegeben werden, welche eine unlösbare Verbindung zwischen dem viskoelastischen Polyurethanschaum und der Versteifungsschicht erzeugen. Der viskoelastische Polyurethanschaum kann auch mit dem Versteifungselement verklebt oder verschmolzen sein.

Ferner wird ein Haushaltsgerät, insbesondere ein wasserführendes Haushaltsgerät, mit einem Aufnahmebereich und einer derartigen Isolationsvorrichtung vorgeschlagen, wobei die Isolationsvorrichtung derart an dem Aufnahmebereich angebracht ist, dass das Isolationselement an dem Aufnahmebereich anliegt.

Das heißt, das Isolationselement ist zwischen dem Aufnahmebereich und dem Versteifungselement angeordnet. Die Isolationsvorrichtung kann beispielsweise auf den Aufnahmebereich aufgeklebt, auf diesen aufgeschmolzen oder einfach auf diesen aufgelegt sein. Das Haushaltsgerät ist, wie zuvor erwähnt, insbesondere eine Haushaltsgeschirrspülmaschine. Das Haushaltsgerät kann jedoch auch eine Haushaltswaschmaschine, ein Herd, ein Backofen ein Kühlschrank oder dergleichen sein. Der Aufnahmebereich ist insbesondere ein Spülbehälter einer Haushaltsgeschirrspülmaschine. Der Aufnahmebereich ist vorzugsweise würfelförmig oder quaderförmig und umfasst einen Boden, eine dem Boden gegenüberliegend angeordnete Decke, zwei einander gegenüberliegend angeordnete Seitenwände, eine Rückwand und eine der Rückwand gegenüberliegend angeordnete Tür. Das Isolationselement kann beispielsweise an den Seitenwänden, an der Rückwand, an der Decke und an der Tür vorgesehen sein. Hierfür können mehrere Isolationselemente vorgesehen sein. Das Isolationselement kann alternativ jedoch auch beispielsweise nur an der Decke oder nur an den Seitenwänden vorgesehen sein.

Weiterhin wird ein Verfahren zum Herstellen einer Isolationsvorrichtung für einen Aufnahmebereich eines Haushaltsgeräts, insbesondere eines wasserführenden Haushaltgeräts, vorgeschlagen. Das Verfahren umfasst die Schritte: a) Einlegen eines Versteifungselements in eine Form, b) Einbringen eines Gemischs aus Polyurethanrohkomponenten in die Form, c) Ausreagieren und Aufschäumen des Gemischs zu einem viskoelastischen Polyurethanschaum, um an das Versteifungselement ein aus dem viskoelastischen Polyurethanschaum gefertigtes Isolationselement anzuschäumen und so die Isolationsvorrichtung zu bilden, und d) Entformen der Isolationsvorrichtung.

Die Form umfasst insbesondere ein Formunterteil und ein auf das Formunterteil aufgelegtes Formoberteil. Das Formoberteil kann von dem Formunterteil abgehoben werden. Sowohl das Formunterteil als auch das Formoberteil weisen eine Kavität auf. In die Kavität des Formunterteils kann das Versteifungselement eingelegt werden. Die Kavität des Formoberteils wird mit dem viskoelastischen Polyurethanschaum ausgeschäumt. Die Polyurethanrohkomponenten können ein Isocyanat, ein Polyol und optional ein Treibmittel umfassen. Nach dem Vermischen der Polyurethanrohkomponenten zu dem Gemisch wird dieses als Flüssigkeit in die Form eingebracht, beispielsweise in diese eingegossen. Die Polyurethanrohkomponenten reagieren dann chemisch miteinander, wodurch sich in dem Gemisch die Poren bilden und das Gemisch zu dem viskoelastischen Polyurethanschaum aufgeschäumt wird. Zum Entformen der Isolationsvorrichtung wird das Formoberteil von dem Formunterteil abgehoben, und die Isolationsvorrichtung wird aus dem Formunterteil entnommen.

Gemäß einer Ausführungsform wird in dem Schritt a) zumindest ein Teil des Aufnahmebereichs als Versteifungselement in die Form eingelegt.

Das heißt, der Teil des Aufnahmebereichs fungiert als Versteifungselement. In diesem Fall ist ein separates Versteifungselement nicht erforderlich.

Gemäß einer weiteren Ausführungsform wird in dem Schritt a) eine Tür des Aufnahmebereichs als Versteifungselement in die Form eingelegt.

Insbesondere wird eine Innentür als Blechbiegeteil in die Form eingelegt, wobei dann das Isolationselement direkt an die Tür, insbesondere an die Innentür, angeschäumt wird.

Gemäß einer weiteren Ausführungsform wird in dem Schritt a) eine zu dem Aufnahmebereich umformbare Platine als Versteifungselement in die Form eingelegt.

Die Platine kann beispielsweise eine Edelstahlplatte sein. Die Platine kann beliebige Ausschnitte oder Durchbrüche aufweisen. An die Platine werden in der Form bevorzugt mehrere Isolationselemente angeschäumt.

Gemäß einer weiteren Ausführungsform umfasst das Verfahren ferner einen nach dem Schritt d) durchgeführten Schritt e) eines Umformens der Platine zu dem Aufnahmebereich.

Dies kann beispielsweise in einem Tiefziehwerkzeug durchgeführt werden. Das heißt, an den fertigen Aufnahmebereich muss die Isolationsvorrichtung nicht nochmals separat montiert werden.

Weitere mögliche Implementierungen der Isolationsvorrichtung, des Haushaltsgeräts und/oder des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Isolationsvorrichtung, des Haushaltsgeräts und/oder des Verfahrens hinzufügen.

Weitere vorteilhafte Ausgestaltungen und Aspekte der Isolationsvorrichtung, des Haushaltsgeräts und/oder des Verfahrens sind Gegenstand der Unteransprüche sowie der im Folgenden beschriebenen Ausführungsbeispiele der Isolationsvorrichtung, des Haushaltsgeräts und/oder des Verfahrens. Im Weiteren werden die Isolationsvorrichtung, das Haushaltsgerät und/oder das Verfahren anhand von bevorzugten Ausführungsformen unter Bezugnahme auf die beigelegten Figuren näher erläutert.

Es zeigen
- Fig. 1: eine schematische perspektivische Ansicht einer Ausführungsform eines Haushaltsgeräts;
- Fig. 2: eine stark vergrößerte schematische Schnittansicht eines Aufnahmebereichs für das Haushaltsgerät gemäß Fig. 1;
- Fig. 3: ein schematisches Blockdiagramm eines Verfahrens zum Herstellen einer Isolationsvorrichtung für den Aufnahmebereich gemäß Fig. 2;
- Fig. 4: eine schematische Schnittansicht einer Ausführungsform einer Form zum Herstellen einer Isolationsvorrichtung für den Aufnahmebereich gemäß Fig. 2;
- Fig. 5: eine weitere schematische Schnittansicht der Form gemäß Fig. 4;
- Fig. 6: eine schematische Schnittansicht einer Ausführungsform einer Isolationsvorrichtung für den Aufnahmebereich gemäß Fig. 2;
- Fig. 7: eine schematische Schnittansicht einer weiteren Ausführungsform einer Form zum Herstellen einer Isolationsvorrichtung für den Aufnahmebereich gemäß Fig. 2;
- Fig. 8: eine weitere schematische Schnittansicht der Form gemäß Fig. 7;
- Fig. 9: eine schematische Schnittansicht einer weiteren Ausführungsform eines Isolationselements für den Aufnahmebereich gemäß Fig. 2;
- Fig. 10: eine schematische Explosionsansicht einer Ausführungsform des Aufnahmebereichs gemäß Fig. 2;
- Fig. 11: eine schematische Schnittansicht einer weiteren Ausführungsform einer Form zum Herstellen einer Isolationsvorrichtung für den Aufnahmebereich gemäß Fig. 2;
- Fig. 12: eine weitere schematische Schnittansicht der Form gemäß Fig. 11;
- Fig. 13: eine schematische Schnittansicht einer weiteren Ausführungsform einer Isolationsvorrichtung für den Aufnahmebereich gemäß Fig. 2; und
- Fig. 14: eine schematische Schnittansicht des Aufnahmebereichs gemäß Fig. 2.

In den Figuren sind gleiche oder funktionsgleiche Elemente mit denselben Bezugszeichen versehen worden, sofern nichts anderes angegeben ist.

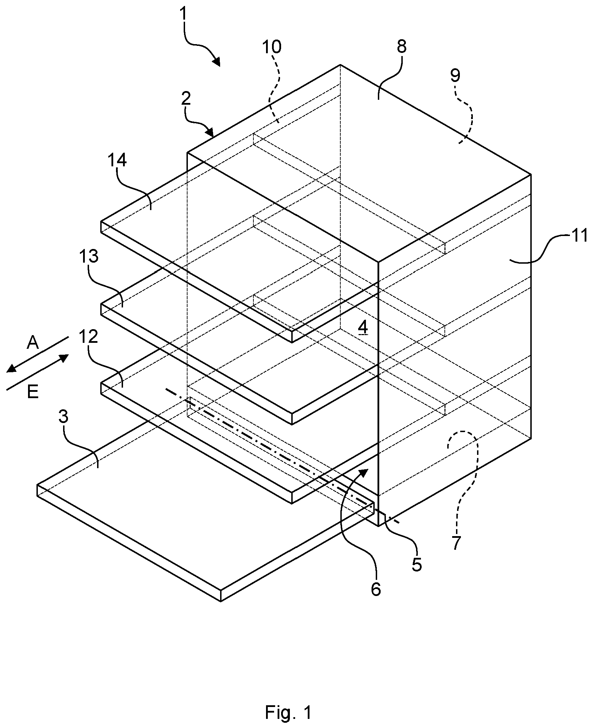

Die Fig. 1 zeigt eine schematische perspektivische Ansicht einer Ausführungsform eines Haushaltsgeräts 1. Das Haushaltsgerät 1 ist insbesondere ein wasserführendes Haushaltsgerät, wie beispielsweise eine Haushaltsgeschirrspülmaschine oder eine Haushaltswaschmaschine. Das Haushaltsgerät 1 kann jedoch auch ein Kühlschrank, ein Herd, ein Backofen oder dergleichen sein. Nachfolgend wird jedoch davon ausgegangen, dass das Haushaltsgerät 1 eine Haushaltsgeschirrspülmaschine ist.

Das Haushaltsgerät 1 weist einen Aufnahmebereich 2 auf, welcher über eine Tür 3, insbesondere wasserdicht, verschließbar ist. Hierzu kann zwischen der Tür 3 und dem Aufnahmebereich 2 eine Dichteinrichtung vorgesehen sein. Der Aufnahmebereich 2 ist vorzugsweise quaderförmig. Der Aufnahmebereich 2 kann ein Spülbehälter sein. Der Aufnahmebereich 2 kann in einem Gehäuse des Haushaltsgeräts 1 angeordnet sein. Der Aufnahmebereich 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Aufnahmebereichs 2 geschlossen oder geöffnet werden. Der Aufnahmebereich 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Der Boden 7 kann alternativ beispielsweise aus einem Kunststoffmaterial gefertigt sein.

Das Haushaltsgerät 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Aufnahmebereich 2 angeordnet. Jede Spülgutaufnahme 12 bis 14 ist wahlweise in den Aufnahmebereich 2 hinein- oder aus diesem herausverlagerbar. Insbesondere ist jede Spülgutaufnahme 12 bis 14 in einer Einschubrichtung E (Pfeil) in den Aufnahmebereich 2 hineinschiebbar oder hineinfahrbar und entgegen der Einschubrichtung E (Pfeil) in einer Auszugsrichtung A (Pfeil) aus dem Aufnahmebereich 2 herausziehbar oder herausfahrbar.

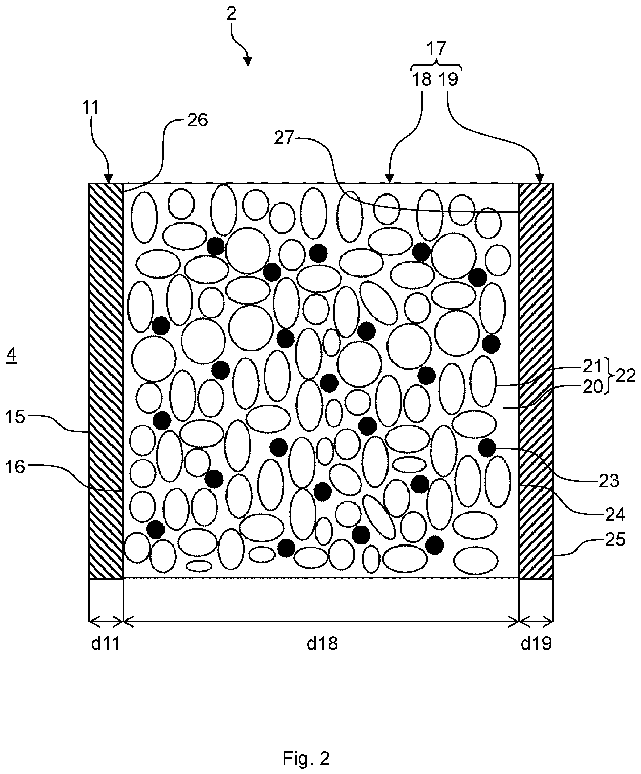

Die Fig. 2 zeigt eine stark vergrößerte schematische Schnittansicht einer Ausführungsform des Aufnahmebereichs 2. Insbesondere ist in der Fig. 2 nur ein Ausschnitt der Seitenwand 11 gezeigt. Die Seitenwand 11 kann, wie zuvor erwähnt, beispielsweise aus einem Edelstahlblech gefertigt sein. Die Seitenwand 11 umfasst eine dem Spülraum 4 zugewandte Innenseite 15 sowie eine dem Spülraum 4 abgewandte Außenseite 16. Die Innenseite 15 und die Außenseite 16 sind parallel zueinander platziert. Die Seitenwand 11 weist eine Dicke d11 auf. Die Dicke d11 kann beispielsweise 0,2 bis 1 mm betragen.

In der Fig. 2 ist ferner eine Isolationsvorrichtung 17 zum thermischen und/oder akustischen Isolieren des Aufnahmebereichs 2 gezeigt. Die Isolationsvorrichtung 17 dient der Wärmedämmung und/oder der Schalldämmung des Aufnahmebereichs 2 und kann daher auch als thermische und/oder akustische Dämmvorrichtung bezeichnet werden. Die Isolationsvorrichtung 17 umfasst ein Isolationselement 18 und ein Versteifungselement 19 zum Versteifen des Isolationselements 18. Das Versteifungselement 19 ist fest mit dem Isolationselement 18 verbunden.

Das Isolationselement 18 ist aus einem Schaummaterial, insbesondere aus einem viskoelastischen Schaummaterial, gefertigt und umfasst ein Matrixmaterial 20, nämlich Polyurethan, welches mit einer Vielzahl von Zellen, Hohlräumen oder Poren 21 durchsetzt ist. Die Poren 21 können jede beliebige Geometrie aufweisen. Beispielsweise können die Poren 21 kugelförmig oder ellipsoidförmig sein. Das Matrixmaterial 20 zusammen mit den Poren 21 bildet einen viskoelastischen Polyurethanschaum 22. Der viskoelastische Polyurethanschaum 22 kann offenporig oder geschlossenporig sein. Das heißt, dass die Poren 21 entweder untereinander in Verbindung oder untereinander nicht in Verbindung sind.

Ferner sind in dem Matrixmaterial 20 Partikel 23 eingebettet. Die Partikel 23 sind gleichmäßig in dem Matrixmaterial 20 verteilt angeordnet. Die Partikel 23 können beispielsweise Metallpulver, Gesteinspulver, Graphit, insbesondere Blähgraphit, Kunststoffe oder andere geeignete Materialien umfassen. Dabei weisen die Partikel 23 jedoch eine größere Dichte als das Matrixmaterial 20 auf. Hierdurch wirken die Partikel 23 als Massepunkte in dem Isolationselement 18, wodurch der Verlustfaktor des Isolationselements 18 erhöht wird. Unter dem "Verlustfaktor" ist vorliegend bei physikalischen Schwingungen unterschiedlicher Natur das Verhältnis des verlustbehafteten Imaginärteils zu dem verlustfreien Realteil einer komplexen Größe zu verstehen.

Der viskoelastische Polyurethanschaum 22, insbesondere das Isolationselement 18, weist bei 40 °C und bei einer Frequenz von 100 bis 800 Hz einen Verlustfaktor von größer als 0,2, bevorzugt von größer als 0,35, weiter bevorzugt von größer als 0,5 auf. Insbesondere umfasst der viskoelastische Polyurethanschaum 22 eine Wärmeleitfähigkeit zwischen 20 und 80 mW/(m*K), bevorzugt zwischen 40 und 60 mW/(m*K), weiter bevorzugt zwischen 50 und 60 mW/(m*K).

Die Isolationsvorrichtung 17 ist insbesondere an der Außenseite 16 der Seitenwand 11 vorgesehen. Dabei kann das Isolationselement 18 beispielsweise auf die Außenseite16 aufgeklebt, an diese angeschmolzen oder auch direkt an diese angeschäumt sein. Die Isolationsvorrichtung 17 kann auch nur auf den Aufnahmebereich 2 aufgelegt sein. Das Isolationselement 18 umfasst eine Dicke d18. Die Dicke d18 ist größer als die Dicke d11. Beispielsweise beträgt die Dicke d18 mehr als 2 mm, bevorzugt mehr als 10 mm, weiter bevorzugt mehr als 15 mm.

Das Versteifungselement 19 umfasst eine Innenseite 24, an die das Isolationselement 18 bevorzugt direkt angeschäumt ist, sowie eine dem Isolationselement 18 abgewandte Außenseite 25. Das Isolationselement 18 umfasst eine Oberfläche 26, welche mit der Seitenwand 11 verbunden ist, und eine Oberfläche 27, welche mit dem Versteifungselement 19 verbunden ist. Das Versteifungselement 19 weist eine Dicke d19 auf. Die Dicke d19 ist kleiner als die Dicke d18. Vorzugsweise ist die Dicke d19 kleiner als 10 mm, bevorzugt kleiner als 5 mm, weiter bevorzugt kleiner als 1 mm. Für den Fall, dass die Dicke d19 kleiner als 1 mm ist, wird als Material für das Versteifungselement 19 beispielsweise ein Stahlblech verwendet.

Der viskoelastische Polyurethanschaum 22 weist eine Dichte von weniger als 300 kg/m³, bevorzugt von weniger als 250 kg/m³, weiter bevorzugt von weniger als 200 kg/m³, auf. Die Partikel 23 hingegen weisen eine größere Dichte als der viskoelastische Polyurethanschaum 22 und als das Matrixmaterial 20 auf. Beispielsweise können die Partikel 23 eine Dichte zwischen 500 und 8.000 kg/m³, insbesondere von 2.200 kg/m³, aufweisen. Insbesondere weisen die Partikel 23 auch einen höheren E-Modul auf als das Matrixmaterial 20 beziehungsweise als der viskoelastische Polyurethanschaum 22 auf. Die Partikel 23 umfassen insbesondere eine Partikelgrößer von weniger als 500 µm.

Das Versteifungselement 19 kann eine Bitumenmatte oder Bitumenplatte sein. Ferner kann das Versteifungselement 19 auch ein Blech sein, aus Papier oder Pappe oder aus Aluminiumpappe gefertigt sein. Das Versteifungselement 19 kann auch aus Kunststoff, insbesondere aus einer Kunststofffolie, oder aus Holz gefertigt sein. Ferner kann das Versteifungselement 19, anders als in der Fig. 2 gezeigt, auch Teil des Aufnahmebereichs 2 sein. Beispielsweise kann die Seitenwand 11 selbst als Versteifungselement 19 fungieren.

Mit Hilfe des Versteifungselements 19 ist es möglich, die Isolationsvorrichtung 17 zu versteifen, so dass diese gut handhabbar und bevorzugt automatisiert an dem Aufnahmebereich 2 montierbar ist. Ohne das Versteifungselement 19 weist das Isolationselement 18 aufgrund seiner Schaumstruktur und seiner geringen Dichte eine sehr geringe Biegesteifigkeit auf, was das Handling erschweren würde.

Bei der Herstellung des Haushaltsgeräts 1 ist es erforderlich, die Isolationsvorrichtung 17 zu fertigen und an dem Aufnahmebereich 2 zu montieren. Durch die geringe Dicke d18, die geringe Eigenstabilität und die hohe Klebrigkeit des aus dem viskoelastischen Polyurethanschaum 22 gefertigten Isolationselements 18 ist eine prozesssichere Montage schwer zu gewährleisten. Das klebrige und biegeschlaffe Isolationselement 18 lässt sich weder manuell noch automatisch sicher montieren. Mit Hilfe des Versteifens der Isolationsvorrichtung 17 mit dem Versteifungselement 19 wird die Montagefähigkeit deutlich verbessert und ein günstigerer, stabilerer Fertigungsprozess möglich. Dabei ist die Steifigkeit des Versteifungselements 19 größer als die des Isolationselements 18 selbst.

Bei flächigen Bauteilen, wie beispielsweise der Tür 3 des Haushaltsgeräts 1, ist die Dicke d18 des Isolationselements 18 in weiten Bereichen dicker als die Dicke d19 des Versteifungselements 19. Wie zuvor erwähnt, ist die Dicke d18 des Illustrationselements 18 größer als 2 mm, vorzugsweise größer als 10 mm, insbesondere größer als 15 mm. Die Dicke d19 des Versteifungselements ist geringer als 10 mm, vorzugsweise geringer als 5 mm. Auch ist eine sehr geringe Dicke d19 von weniger als 1 mm denkbar. Hierdurch kann insbesondere Material eingespart werden. Dabei ist jedoch darauf zu achten, dass die Steifigkeit des Versteifungselements 19 entsprechend hoch gewählt wird. Mit Hilfe des Versteifungselements 19 wird die Isolationsvorrichtung 17 versteift. Damit ist eine Dimensionsänderung in dem elastischen Bereich nicht mehr möglich. Die prozesssichere Fertigbarkeit der Isolationsvorrichtung 17 ist erhöht.

Die nicht versteifte Oberfläche 26 des Isolationselements 18 wird zur besseren Entformung, Handhabung bei der Montage und späteren Recyclebarkeit als offenes Bauteil gefertigt. Dies wird durch das Aufbringen einer Trennschicht in eine Form erreicht, in welcher die Isolationsvorrichtung 17 gefertigt wird. Diese Trennschicht kann flüssig oder fest ausgeprägt sein und durch Auflegen, Aufsprühen, Zerstäuben oder dergleichen aufgebracht werden. Beispielsweise kann eine Trennfolie oder ein Trennmittel eingesetzt werden. Diese Trennschicht kann auch funktionelle Aufgaben, wie das Abdichten gegen Dampf, das Positionieren, Führen und Abschirmen von Bauteilen, wie beispielsweise Kabeln, übernehmen. Die Trennschicht kann durch ihre Gestaltung eine saubere Positionierung der Baugruppe in der montierten Zielposition gewährleisten. Die Trennschicht kann unerwünschte Eigenschaften des Isolationselements 18 für den Benutzer kaschieren. Unerwünschte Eigenschaften wären beispielsweise die Klebrigkeit oder die weiche Struktur des viskoelastischen Polyurethanschaums 22.

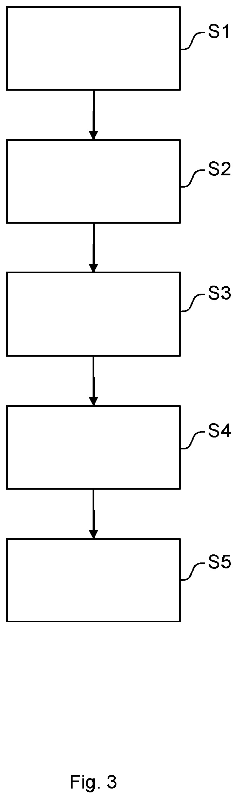

Die Fig. 3 zeigt ein schematisches Blockdiagramm eines Verfahrens zum Herstellen der Isolationsvorrichtung 17.

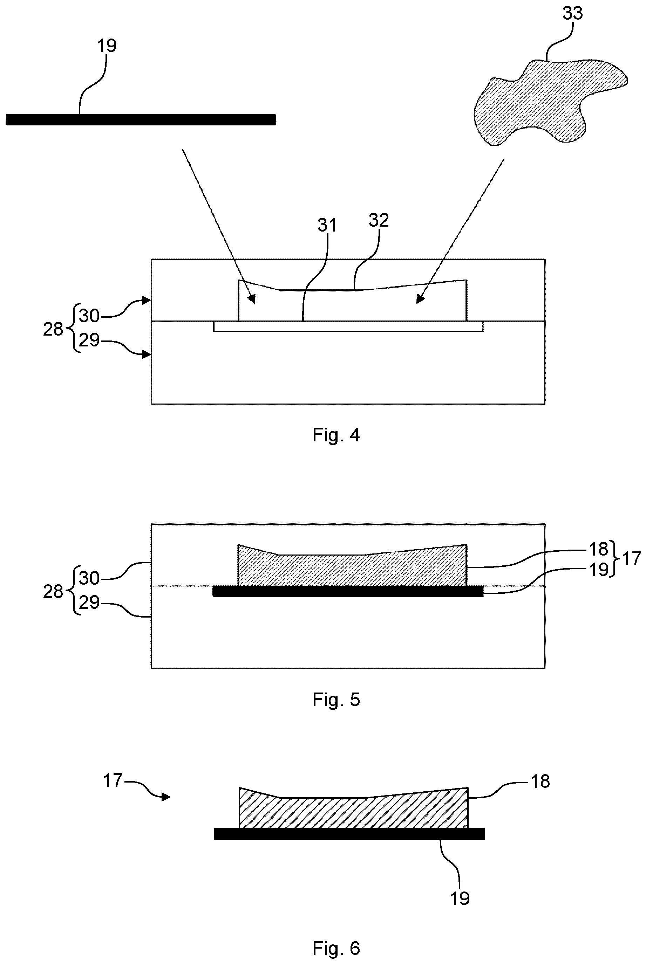

Die Fig. 4 bis 6 zeigen das schrittweise Herstellen der Isolationsvorrichtung 17 mit Hilfe einer Form 28.

Nachfolgend wird auf die Fig. 3 bis 6 gleichzeitig Bezug genommen.

Zunächst wird in einem Schritt S1 das Versteifungselement 19 in die Form 28 eingelegt. Die Form 28 ist eine Gießform oder Gussform. Die Form 28 umfasst ein Formunterteil 29 und ein Formoberteil 30, welches auf dem Formunterteil 29 angeordnet ist. Das Formoberteil 30 kann von dem Formunterteil 29 abgehoben werden, so dass das Versteifungselement 19 in die Form 28 eingelegt werden kann. Das Formunterteil 29 umfasst eine Kavität 31 zum Aufnehmen des Versteifungselements 19. Das Formoberteil 30 umfasst eine Kavität 32, in welcher nach dem Herstellen der Isolationsvorrichtung 17 das Isolationselement 18 aufgenommen ist.

Nach dem Einlegen des Versteifungselements 19 und dem Verschließen der Form 28 wird ein flüssiges Gemisch 33 aus Rohkomponenten des viskoelastischen Polyurethanschaums 22 in die Form 28 eingebracht. Dies erfolgt in einem Schritt S2. Das flüssige Gemisch 33 kann beispielsweise durch eine in dem Formoberteil 30 vorgesehene Öffnung in die Kavität 32 eingegossen werden. Das Gemisch 33 ist vorliegend eine Mischung aus zwei Rohkomponenten, nämlich einem Isocyanat und einem Polyol. Dem Gemisch 33 kann ferner ein Treibmittel zugesetzt werden, welches zur Ausgasung führt. Hierdurch entsteht im Zuge der chemischen Reaktion der beiden Rohkomponenten aus dem Gemisch 33 der viskoelastische Polyurethanschaum 22.

Das heißt, in einem Schritt S3 wird das Gemisch 33 zu dem viskoelastischen Polyurethanschaum 22 aufgeschäumt, um an das Versteifungselement 19 das Isolationselement 18 anzuschäumen und so die Isolationsvorrichtung 17 zu bilden. Nach dem Aushärten und/oder Vernetzen des Gemischs 33 wird die Isolationsvorrichtung 17, wie in der Fig. 6 gezeigt, in einem Schritt S4 entformt. Hierzu wird das Formoberteil 30 von dem Formunterteil 29 abgehoben und die Isolationsvorrichtung 17 wird aus dem Formunterteil 29 entnommen.

Das heißt, die Isolationsvorrichtung 17 wird durch die Reaktion der Rohkomponenten des viskoelastischen Polyurethanschaums 22 direkt auf oder an dem Versteifungselement 19 gebildet. Durch die bei der Reaktion entstehenden Klebekräfte entsteht eine stabile Verbindung des Isolationselements 18 mit dem Versteifungselement 19. Das Versteifungselement 19 kaschiert ferner die klebrige Oberfläche 27 des Isolationselements 18. Damit entstehen Vorteile für das Handling beziehungsweise das Montieren der Isolationsvorrichtung 17. Beispielsweise kann die Isolationsvorrichtung 17 auf der Seite des Versteifungselements 19 gelagert werden.

Des Weiteren wird das Isolationselement 18 dadurch von einem Benutzer abgeschirmt. Es ist auch möglich, das Versteifungselement 19 derart zu gestalten, dass die dem Benutzer zugewandte Außenseite 25 eine besondere Gestaltung beziehungsweise einen besonderen Aufdruck erhält. Ferner ist es möglich, dieses Herstellungsprinzip auf mehrere Schichten auszudehnen beziehungsweise die bereits gefertigte Isolationsvorrichtung 17 in einem weiteren Prozess mit einem Material mit anderen Eigenschaften zu kombinieren. So kann etwa eine weitere Schaumschicht in einem weiteren Schritt aufgebracht werden. Dies kann beispielsweise erforderlich sein, um die thermischen und/oder akustischen Eigenschaften zu optimieren. Es kann dabei eine beliebige Mischung aus Materialien gewählt werden, um ein Optimum aus akustischen, thermischen und mechanischen Eigenschaften zu erreichen.

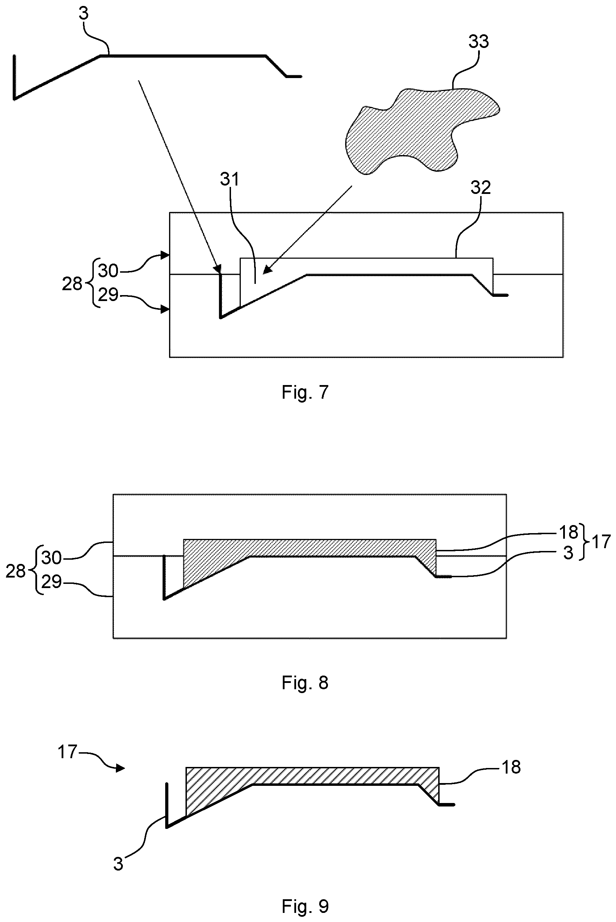

Die Fig. 7 bis 10 zeigen eine Weiterbildung des Verfahrens gemäß der Fig. 3, bei dem anstelle eines separaten Versteifungselements 19 die Tür 3, insbesondere eine Innentür der Tür 3, als Versteifungselement 19 für die Isolationsvorrichtung 17 fungiert. Hierzu wird eine wie zuvor erwähnte Form 28 mit einem Formunterteil 29 und einem Formoberteil 30 verwendet. Das Formunterteil 29 umfasst eine Kavität 31 zum Aufnehmen der Tür 3 und zum teilweisen Aufnehmen des zuvor erwähnten Gemischs 33 der Rohkomponenten des viskoelastischen Polyurethanschaums 22. Das Formoberteil 30 umfasst eine Kavität 32.

In einem Schritt S1 erfolgt das Einlegen der Tür 3 in die Form 28. Nach dem Schließen der Form 28 wird in die Kavitäten 31, 32 das Gemisch 33 der Rohkomponenten eingebracht, welche dann in der geschlossenen Form 28 reagieren. Das Gemisch 33 wird in einem Schritt S2 in die Form 28 eingebracht. In einem Schritt S3 reagieren die Rohkomponenten des viskoelastischen Polyurethanschaums 22 miteinander, und es wird das Gemisch 33 in der Form 28 aufgeschäumt, so dass das Isolationselement 18 an die Tür 3 angeschäumt wird. Nach dem Aushärten und/oder Vernetzen des Gemischs 33 zu dem viskoelastischen Polyurethanschaum 22 wird die Isolationsvorrichtung 17 in einem Schritt S4 entformt.

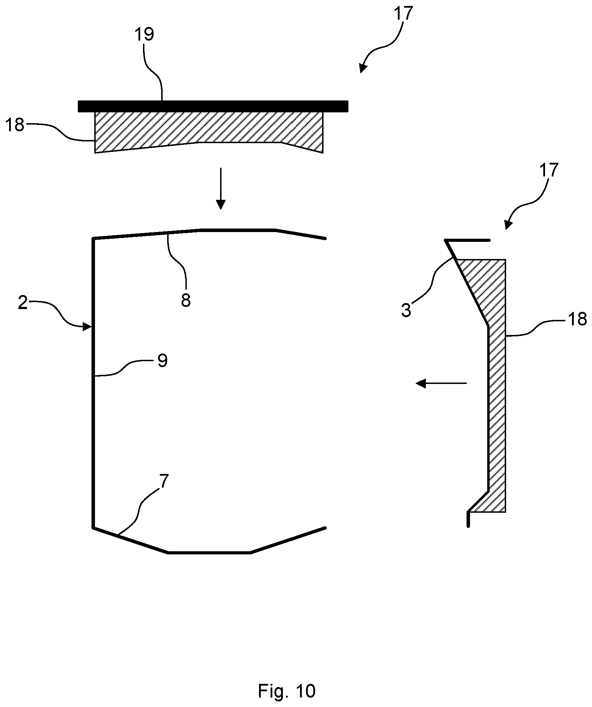

Die Fig. 10 zeigt die Montage der in der Fig. 6 gezeigten Isolationsvorrichtung 17 an dem Aufnahmebereich 2. Die Isolationsvorrichtung 17 wird beispielsweise derart an der Decke 8 des Aufnahmebereichs 2 montiert, dass das Isolationselement 18 an der Decke 8 anliegt. Das heißt, das Isolationselement 18 ist zwischen der Decke 8 und dem Versteifungselement 19 angeordnet. Das Isolationselement 18 kann beispielsweise mit der Decke 8 verklebt oder verschmolzen sein. Alternativ kann die Isolationsvorrichtung 17 auch lose auf der Decke 8 aufliegen. Ferner ist in der Fig. 10 gezeigt, wie die in der Fig. 9 gezeigte Isolationsvorrichtung 17, welche die Tür 3 und das Isolationselement 18 aufweist, an dem Aufnahmebereich 2 montiert wird. Die Tür 3 wird verschwenkbar an dem Aufnahmebereich 2 montiert.

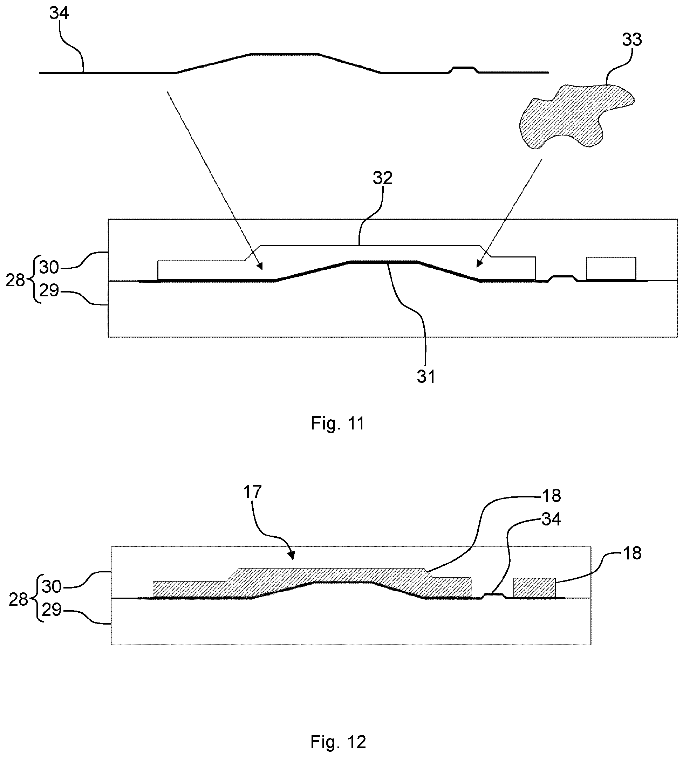

Die Fig. 11 bis 14 zeigen eine weitere Weiterbildung des Verfahrens gemäß der Fig. 3. Bei dieser Ausführungsform des Verfahrens wird zunächst eine zu dem Aufnahmebereich 2 umformbare Platine 34 in eine wie zuvor erläuterte Form 28 eingelegt. Die Form 28 umfasst ein Formunterteil 29 und ein auf dem Formunterteil 29 aufgesetztes Formoberteil 30. Das Formunterteil 29 umfasst eine Kavität 31 zum Aufnehmen der Platine 34, und das Formoberteil 30 umfasst eine entsprechende Kavität 32 zum Aufnehmen des Gemischs 33 der Rohkomponenten.

In einem Schritt S1 wird das Versteifungselement 19 in Form der Platine 34 in die Form 28 eingelegt. Die Form 28 wird dann geschlossen, und in einem Schritt S2 wird das Gemisch 33 der Rohkomponenten des viskoelastischen Polyurethanschaums 22 in die Form 28 eingebracht. In einem Schritt S3 schäumt das Gemisch 33 in der Form 28 auf, so dass sich der viskoelastische Polyurethanschaum 22 bildet, um an die Platine 34 das Isolationselement 18 anzuformen. Dabei können, wie in der Fig. 12 gezeigt, an die Platine 34 mehrere Isolationselemente 18 angeschäumt werden.

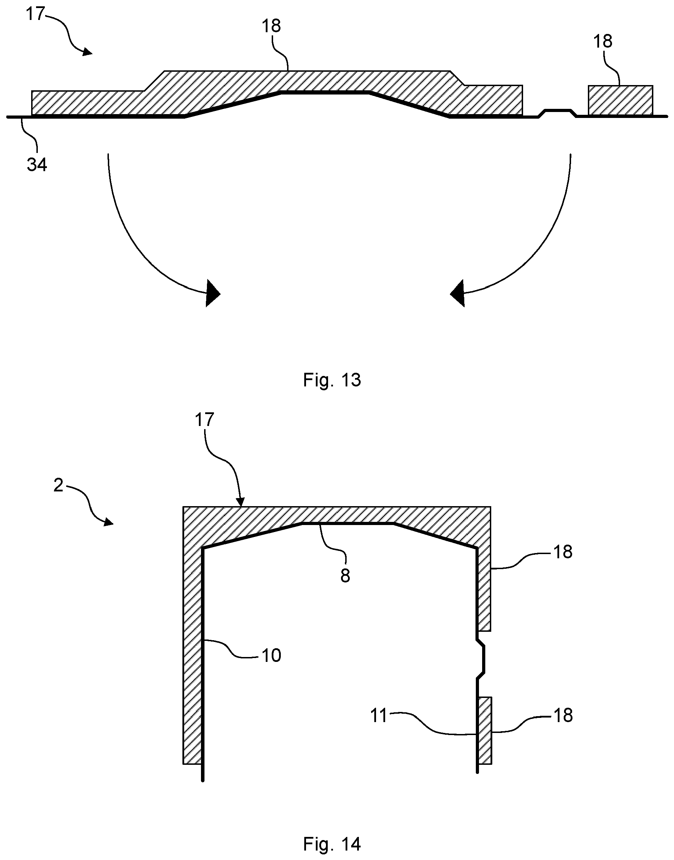

Nach dem Aushärten und/oder Vernetzen des viskoelastischen Polyurethanschaums 22 wird die Isolationsvorrichtung 17 in einem Schritt S4 entformt. In einem weiteren Schritt S5 folgt nach dem Schritt S4 ein Schritt eines Umformens der Platine 34 zu dem Aufnahmebereich 2. Die Fig. 13 zeigt das Umformen gemäß dem Schritt S5, wobei Pfeile den Umformvorgang andeuten, und die Fig. 14 zeigt den fertigen Aufnahmebereich 2. Das Umformen der Platine 34 nach dem Anbringen der Isolationselemente 18 weist den Vorteil auf, dass die Platine 34 eine flache und einfache Geometrie aufweist. Ein aufwändiger Aufbau der Form 28 ist also verzichtbar. In dem Bereich von Biegeradien kann zusätzlicher viskoelastischer Polyurethanschaum 22 vorgehalten werden, um nach dem Umformen in dem Bereich der Biegeradien eine ausreichende Menge an viskoelastischem Polyurethanschaum 22 bereitzustellen.

Mit Hilfe der Isolationsvorrichtung 17 beziehungsweise mit Hilfe des Verfahrens gemäß der Fig. 3 ist wird Montierbarkeit von Schaumbauteilen, insbesondere des Isolationselements 18, verbessert. Das Versteifungselement 19 verbessert die Montierbarkeit und die Handhabbarkeit der Isolationsvorrichtung 17. Mit Hilfe der Isolationsvorrichtung 17 ist eine prozesssichere Montage möglich. Durch das nichtklebrige Versteifungselement 19 wird die Montierbarkeit verbessert. Ferner können Zusatzfunktionen integriert werden. Starker Schrumpf, Dehnung und/oder elastische Verformbarkeit werden durch eine verbesserte Maßhaltigkeit durch das Versteifungselement 19 unproblematisch. Eine spätere Variantenbildung und eine verbesserte Kombinierbarkeit ist möglich. Mehrere verschiedene Materialien können in dem Sandwich kombiniert werden, um die thermischen und akustischen Eigenschaften zu verbessern.

Obwohl die vorliegende Erfindung anhand von Ausführungsbeispielen beschrieben wurde, ist sie vielfältig modifizierbar.

### Verwendete Bezugszeichen

- 1: Haushaltsgerät
- 2: Aufnahmebereich
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Innenseite
- 16: Außenseite
- 17: Isolationsvorrichtung
- 18: Isolationselement
- 19: Versteifungselement
- 20: Matrixmaterial
- 21: Pore
- 22: Viskoelastischer Polyurethanschaum
- 23: Partikel
- 24: Innenseite
- 25: Außenseite
- 26: Oberfläche
- 27: Oberfläche
- 28: Form
- 29: Formunterteil
- 30: Formoberteil
- 31: Kavität
- 32: Kavität
- 33: Gemisch
- 34: Platine

- A: Auszugsrichtung (Pfeil)
- d11: Dicke
- d18: Dicke
- d19: Dicke
- E: Einschubrichtung (Pfeil)
- S1: Schritt
- S2: Schritt
- S3: Schritt
- S4: Schritt
- S5: Schritt

## Patentansprüche

1. Isolationsvorrichtung (17) für einen Aufnahmebereich (2) eines Haushaltsgeräts (1), insbesondere eines wasserführenden Haushaltsgeräts, mit einem Isolationselement (18) zum akustischen Isolieren des Aufnahmebereichs (2) des Haushaltsgeräts (1), insbesondere des wasserführenden Haushaltsgeräts, wobei die Isolationsvorrichtung (17) ein aus einem viskoelastischen Polyurethanschaum (22) gefertigtes Isolationselement (18) zum akustischen Isolieren des Aufnahmebereichs (2) umfasst und **dadurch gekennzeichnet, dass** die Isolationsvorrichtung (17) ein das Isolationselement (18) versteifendes und fest mit dem Isolationselement (18) verbundenes Versteifungselement (19) umfasst.

2. Isolationsvorrichtung (17) nach Anspruch 1, **dadurch gekennzeichnet, dass** der viskoelastische Polyurethanschaum (22) bei 40 °C und bei einer Frequenz von 100 bis 800 Hz einen Verlustfaktor von größer als 0,2, bevorzugt von größer als 0,35, weiter bevorzugt von größer als 0,5, aufweist.

3. Isolationsvorrichtung (17) nach Anspruch 1 oder 2, **dadurch gekennzeichnet, dass** der viskoelastische Polyurethanschaum (22) eine Wärmeleitfähigkeit zwischen 20 und 80 mW/(m*K), bevorzugt zwischen 40 und 60 mW/(m*K), weiter bevorzugt zwischen 50 und 60 mW/(m*K), aufweist.

4. Isolationsvorrichtung (17) nach Anspruche 1, 2 oder 3, **dadurch gekennzeichnet, dass** der viskoelastische Polyurethanschaum (22) eine Dichte von weniger als 300 kg/m³, bevorzugt von weniger als 250 kg/m³, weiter bevorzugt von weniger als 200 kg/m³, aufweist.

5. Isolationsvorrichtung (17) nach einem der vorhergehenden Ansprüche, **dadurch gekennzeichnet, dass** eine Dicke (d18) des Isolationselements (18) größer als 2 mm, bevorzugt größer als 10 mm, weiter bevorzugt größer als 15 mm, ist.

6. Isolationsvorrichtung (17) nach einem der vorhergehenden Ansprüche, **dadurch gekennzeichnet, dass** eine Dicke (d19) des Versteifungselements (19) kleiner als 10 mm, bevorzugt kleiner als 5 mm, weiter bevorzugt kleiner als 1 mm, ist.

7. Isolationsvorrichtung (17) nach einem der vorhergehenden Ansprüche, **dadurch gekennzeichnet, dass** das Versteifungselement (19) Teil des Aufnahmebereichs (2) ist, aus Bitumen gefertigt ist, aus Blech gefertigt ist, aus Papier gefertigt ist, aus Pappe gefertigt ist, aus Aluminiumpappe gefertigt ist, aus Kunststoff, insbesondere aus einer Kunststofffolie, gefertigt ist oder aus Holz gefertigt ist.

8. Isolationsvorrichtung (17) nach einem der vorhergehenden Ansprüche, **dadurch gekennzeichnet, dass** in den viskoelastischen Polyurethanschaum (22) Partikel (23) eingebettet sind.

9. Isolationsvorrichtung (17) nach einem der vorhergehenden Ansprüche, **dadurch gekennzeichnet, dass** der viskoelastische Polyurethanschaum (22) direkt an das Versteifungselement (19) angeschäumt ist.

10. Haushaltsgerät (1), insbesondere wasserführendes Haushaltsgerät, mit einem Aufnahmebereich (2) und einer Isolationsvorrichtung (17) nach einem der vorhergehenden Ansprüche, wobei die Isolationsvorrichtung (17) derart an dem Aufnahmebereich (2) angebracht ist, dass das Isolationselement (18) an dem Aufnahmebereich (2) anliegt.

11. Verfahren zum Herstellen einer Isolationsvorrichtung (17) für einen Aufnahmebereich (2) eines Haushaltsgeräts (1), insbesondere eines wasserführenden Haushaltsgeräts, mit den Schritten:
a) Einlegen (S1) eines Versteifungselements (19) in eine Form (28),
b) Einbringen (S2) eines Gemischs (33) aus Polyurethanrohkomponenten in die Form (28),
c) Ausreagieren und Aufschäumen (S3) des Gemischs (33) zu einem viskoelastischen Polyurethanschaum (22), um an das Versteifungselement (19) ein aus dem viskoelastischen Polyurethanschaum (22) gefertigtes Isolationselement (18) anzuschäumen und so die Isolationsvorrichtung (17) zu bilden, und
d) Entformen (S4) der Isolationsvorrichtung (17).

12. Verfahren nach Anspruch 11, **dadurch gekennzeichnet, dass** in dem Schritt a) zumindest ein Teil des Aufnahmebereichs (2) als Versteifungselement (19) in die Form (28) eingelegt wird.

13. Verfahren nach Anspruch 12, **dadurch gekennzeichnet, dass** in dem Schritt a) eine Tür (3) des Aufnahmebereichs (2) als Versteifungselement (19) in die Form (28) eingelegt wird.

14. Verfahren nach Anspruch 12, **dadurch gekennzeichnet, dass** in dem Schritt a) eine zu dem Aufnahmebereich (2) umformbare Platine (34) als Versteifungselement (19) in die Form (28) eingelegt wird.

15. Verfahren nach Anspruch 14, **gekennzeichnet durch** einen nach dem Schritt c) durchgeführten Schritt e) eines Umformens (S5) der Platine (34) zu dem Aufnahmebereich (2).

## Claims

1. Insulation device (17) for a receiving area (2) of a household appliance (1), in particular a water-guiding household appliance, having an insulation element (18) for acoustically insulating the receiving area (2) of the household appliance (1), in particular the water-guiding household appliance, wherein the insulation device (17) comprises an insulation element (18) made of a viscoelastic polyurethane foam (22) for acoustically insulating the receiving area (2), and **characterised in that** the insulation device (17) comprises a stiffening element (19) stiffening the insulation element (18) and firmly connected to the insulation element (18).

2. Insulation device (17) according to claim 1, **characterised in that** the viscoelastic polyurethane foam (22) at 40°C and at a frequency of 100 to 800 Hz has a loss factor of greater than 0.2, preferably of greater than 0.35, further preferably of greater than 0.5.

3. Insulation device (17) according to claim 1 or 2, **characterised in that** the viscoelastic polyurethane foam (22) has a thermal conductivity of between 20 and 80 mW/(m*K), preferably of between 40 and 60 mW/(m*K), further preferably of between 50 and 60 mW/(m*K).

4. Insulation device (17) according to claims 1, 2 or 3, **characterised in that** the viscoelastic polyurethane foam (22) has a density of less than 300 kg/m³, preferably of less than 250 kg/m³, further preferably of less than 200 kg/m³.

5. Insulation device (17) according to one of the preceding claims, **characterised in that** a thickness (d18) of the insulation element (18) is greater than 2 mm, preferably greater than 10 mm, further preferably greater than 15 mm.

6. Insulation device (17) according to one of the preceding claims, **characterised in that** a thickness (d19) of the stiffening element (19) is less than 10 mm, preferably less than 5 mm, further preferably less than 1 mm.

7. Insulation device (17) according to one of the preceding claims, **characterised in that** the stiffening element (19) is part of the receiving area (2), and is made of bitumen, made of sheet metal, made of paper, made of cardboard, made of aluminium board, made of plastics, in particular of a plastics film, or made of wood.

8. Insulation device (17) according to one of the preceding claims, **characterised in that** particles (23) are embedded in the viscoelastic polyurethane foam (22).

9. Insulation device (17) according to one of the preceding claims, **characterised in that** the viscoelastic polyurethane foam (22) is directly foamed onto the stiffening element (19).

10. Household appliance (1), in particular water-guiding household appliance, having a receiving area (2) and an insulation device (17) according to one of the preceding claims, wherein the insulation device (17) is attached to the receiving area (2) such that the insulation element (18) bears against the receiving area (2).

11. Method for manufacturing an insulation device (17) for a receiving area (2) of a household appliance (1), in particular a water-guiding household appliance, comprising the steps:
a) Inserting (S1) a stiffening element (19) into a mould (28),
b) Introducing (S2) a mixture (33) of polyurethane basic components into the mould (28),
c) Reacting and foaming (S3) the mixture (33) to form a viscoelastic polyurethane foam (22) in order to foam an insulation element (18) made of the viscoelastic polyurethane foam (22) onto the stiffening element (19), and thus to form the insulation device (17), and
d) Demoulding (S4) the insulation device (17).

12. Method according to claim 11, **characterised in that** in step a) at least one part of the receiving area (2) is inserted into the mould (28) as the stiffening element (19).

13. Method according to claim 12, **characterised in that** in step a) a door (3) of the receiving area (2) is inserted into the mould (28) as the stiffening element (19).

14. Method according to claim 12, **characterised in that** in step a) a plate (34), which may be reshaped to the receiving area (2), is inserted into the mould (28) as the stiffening element (19).

15. Method according to claim 14, **characterised by** a step e), carried out after step c), of reshaping (S5) the plate (34) to the receiving area (2).

## Revendications

1. Dispositif d'isolation (17) pour une zone de réception (2) d'un appareil électroménager (1), en particulier d'un appareil électroménager à circulation d'eau, comprenant un élément isolant (18) destiné à une isolation acoustique de la zone de réception (2) de l'appareil électroménager (1), en particulier de l'appareil électroménager à circulation d'eau,
dans lequel le dispositif d'isolation (17) comprend un élément isolant (18) constitué d'une mousse de polyuréthane viscoélastique (22) destiné à isoler acoustiquement la zone de réception (2), et
**caractérisé en ce que** le dispositif d'isolation (17) comprend un élément raidisseur (19) rigidifiant l'élément isolant (18) et solidaire de l'élément isolant (18).

2. Dispositif d'isolation (17) selon la revendication 1, **caractérisé en ce que** la mousse de polyuréthane viscoélastique (22) présente, à 40 °C et à une fréquence de 100 à 800 Hz, un facteur de perte supérieur à 0,2, de préférence supérieur à 0,35 de manière plus préférée supérieur à 0,5.

3. Dispositif d'isolation (17) selon la revendication 1 ou 2, **caractérisé en ce que** la mousse de polyuréthane viscoélastique (22) a une conductivité thermique comprise entre 20 et 80 mW/(m*K), de préférence entre 40 et 60 mW/(m*K), de manière plus préférée entre 50 et 60 mW/(m*K).

4. Dispositif d'isolation (17) selon la revendication 1, 2 ou 3, **caractérisé en ce que** la mousse de polyuréthane viscoélastique (22) a une densité inférieure à 300 kg/m³, de préférence inférieure à 250 kg/m³, de manière plus préférée inférieure à 200 kg/m³.

5. Dispositif d'isolation (17) selon l'une des revendications précédentes, **caractérisé en ce que** une épaisseur (d18) de l'élément isolant (18) est supérieure à 2 mm, de préférence supérieure à 10 mm de manière plus préférée supérieure à 15 mm.

6. Dispositif d'isolation (17) selon l'une des revendications précédentes, **caractérisé en ce que** une épaisseur (d19) de l'élément raidisseur (19) est inférieure à 10 mm, de préférence inférieure à 5 mm, de manière plus préférée inférieure à 1 mm.

7. Dispositif d'isolation (17) selon l'une des revendications précédentes, **caractérisé en ce que** l'élément raidisseur (19) est solidaire de la zone de réception (2), est fabriqué en bitume, est fabriqué en tôle, est fabriqué en papier, est fabriqué en carton, est fabriqué en carton aluminisé, est fabriqué en matière plastique, notamment en une feuille de matière plastique ou est fabriqué en bois.

8. Dispositif d'isolation (17) selon l'une des revendications précédentes, **caractérisé en ce que** des particules (23) sont incorporées dans la mousse de polyuréthane viscoélastique (22).

9. Dispositif d'isolation (17) selon l'une des revendications précédentes, **caractérisé en ce que** la mousse de polyuréthane viscoélastique (22) est formée par moussage directement sur l'élément raidisseur (19).

10. Appareil électroménager (1), notamment appareil électroménager à circulation d'eau, comprenant une zone de réception (2) et un dispositif d'isolation (17) selon l'une des revendications précédentes, dans lequel le dispositif d'isolation (17) est mis en place sur la zone de réception (2) de telle sorte que l'élément isolant (18) est appliqué contre la zone de réception (2).

11. Procédé de fabrication d'un dispositif d'isolation (17) pour une zone de réception (2) d'un appareil électroménager (1), en particulier d'un appareil électroménager à circulation d'eau, comprenant les étapes suivantes :
a) insertion (S1) d'un élément raidisseur (19) dans un moule (28),
b) introduction (S2) d'un mélange (33) de constituants de base de polyuréthane dans le moule (28),
c) réaction et moussage (S3) du mélange (33) pour obtenir une mousse de polyuréthane viscoélastique (22), de manière à former par moussage l'élément isolant (18) constitué de mousse de polyuréthane viscoélastique (22) sur l'élément raidisseur (19) et à former ainsi le dispositif d'isolation (17), et
d) démoulage (S4) du dispositif d'isolation (17).

12. Procédé selon la revendication 11, **caractérisé en ce que**, dans l'étape a), au moins une partie de la zone de réception (2) est placée dans le moule (28) à titre d'élément raidisseur (19).

13. Procédé selon la revendication 12, **caractérisé en ce que**, dans l'étape a), une porte (3) de la zone de réception (2) est placée dans le moule (28) à titre d'élément raidisseur (19).

14. Procédé selon la revendication 12, **caractérisé en ce que**, dans l'étape a), une plaque (34) pouvant être reformée pour épouser le contour de la zone de réception (2) est placée dans le moule (28) à titre d'élément raidisseur (19).

15. Procédé selon la revendication 14, **caractérisé par** une étape e), mise en œuvre après l'étape c), de reformage (S5) de la plaque (34) pour épouser le contour de la zone de réception (2).
